(19) Europäisches Patentamt / European Patent Office / Office européen des brevets

(11) EP 3 177 661 B1

(12) # FASCICULE DE BREVET EUROPEEN

(45) Date de publication et mention de la délivrance du brevet:
**14.06.2023 Bulletin 2023/24**

(21) Numéro de dépôt: **15766892.2**

(22) Date de dépôt: **03.08.2015**

(51) Classification Internationale des Brevets (IPC):
***C08G 18/48*** *(2006.01)* ***C08G 18/75*** *(2006.01)*
***C09D 7/00*** *(2018.01)* ***C08G 18/28*** *(2006.01)*

(52) Classification Coopérative des Brevets (CPC):
**C09D 7/43; C08G 18/2825; C08G 18/4833; C08G 18/755; C09D 175/04**

(86) Numéro de dépôt international:
**PCT/FR2015/052140**

(87) Numéro de publication internationale:
**WO 2016/066910 (06.05.2016 Gazette 2016/18)**

(54) **AGENT EPAISSISSANT POUR SYSTEMES AQUEUX, FORMULATIONS LE CONTENANT ET UTILISATIONS**

VERDICKUNGSMITTEL FÜR WÄSSRIGE SYSTEME, FORMULIERUNGEN DAMIT UND VERWENDUNG DAVON

THICKENING AGENT FOR AQUEOUS SYSTEMS, FORMULATIONS CONTAINING SAME AND USE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2014 FR 1457600**

(43) Date de publication de la demande:
**14.06.2017 Bulletin 2017/24**

(73) Titulaire: **COATEX**
**69730 Genay (FR)**

(72) Inventeurs:
- **SUAU, Jean-Marc**
  **69480 Lucenay (FR)**
- **MATTER, Yves**
  **69650 Quincieux (FR)**
- **RUHLMANN, Denis**
  **69730 Genay (FR)**

(74) Mandataire: **Balmefrezol, Ludovic Francis Pierre**
**Coatex SAS**
**35, rue Ampère**
**69730 Genay (FR)**

(56) Documents cités:
**EP-A1- 1 477 511**
**US-A- 3 718 712**
**US-A1- 2011 243 873**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

**Description**

La présente invention se rapporte à de nouveaux épaississants associatifs appartenant à la catégorie des HEUR (Hydrophobically modified Ethyoxylated URethane). Ces produits contiennent un composé associatif de type bicycloheptène. La présente invention concerne également des formulations intermédiaires contenant de tels épaississants, ainsi que les compositions finales, par exemple les compositions de peinture.

Les peintures sont constituées de charges, de pigments et d'au moins un polymère organique appelé liant. Outre les charges, les pigments et le liant, une composition de peinture comporte également un solvant (qui est l'eau dans le cas des peintures en phase aqueuse), des additifs pour la rhéologie, des additifs pour la stabilité (stockage, formation du film, UV) et d'autres additifs pour l'obtention de propriétés spéciales. Le comportement et les propriétés des peintures dépendent de la nature de leurs constituants, notamment du liant, des charges, des pigments, ainsi que des additifs rhéologiques. Elles contiennent généralement un ou plusieurs épaississants dont la fonction est de maîtriser la rhéologie des compositions, tant au stade de leur fabrication, que pendant leur transport, leur stockage ou au cours de leur mise en oeuvre. Etant donnée la diversité des contraintes pratiques au niveau de chacune de ces étapes, il est intéressant pour le formulateur de disposer d'une gamme d'épaississants présentant des comportements rhéologiques différents en composition.

Parmi tous les épaississants pour peinture, on distingue :

- les épaississants naturels à base de cellulose également appelés éthers cellulosiques, de type HEC ou de type HMHEC (Hydrophobically Modified HEC),
- les épaississants acryliques de type non associatifs, appelés ASE (Alkali Swellable Emulsion) et ceux de type associatifs, appelés HASE (Hydrophobically modified Alcali Swellable Emulsion) et
- les polyuréthanes épaississants associatifs de type HEUR (Hydrophobically modified Ethoxylated URethane »).

Les épaississants HASE peuvent, par exemple, être obtenus par polymérisation en présence d'un agent tensioactif anionique, d'un monomère d'acide (méth)acrylique, d'un monomère de (méth)acrylate d'alkyle et d'un monomère hydrophobe constitué d'une chaîne aliphatique longue.

Les polyuréthanes épaississants ou HEUR, quant à eux, résultent de la condensation entre un composé de type poly(alkylène glycol), un polyisocyanate et un réactif qui confère l'associativité de type alkyle, aryle ou aryalkyle constitué d'un groupe terminal hydrophobe.

Bien que les épaississants HASE et HEUR appartiennent à la catégorie des épaississants associatifs, le mécanisme d'épaississement ne peut pas être considéré comme complètement identique. En effet, le mécanisme d'épaississement de la formulation aqueuse en présence d'un HASE est dû à la présence des groupements hydrophobes qui sont susceptibles de s'assembler sous forme d'agrégats micellaires, mais également à la formation d'un gel qui résulte d'interactions ioniques entre les fonctions carboxyliques portées par le squelette du polymère et les molécules d'eau du solvant aqueux (JCT Research, Vol. 2 N°6, April 2005 - W. Wu and G.D. Shay - Tailoring HASE Rheology Through Polymer Design: Effects of Hydrophobe Size, Acid Content, And Molecular Weight). Contrairement aux épaississants HASE, les épaississants HEUR sont des composés non ioniques et leur mécanisme d'épaississement n'est pas dépendant d'interactions ioniques dans le milieu (Polymers as Rheology Modifiers - Chap.12 : Systems approach to Rheology Control - pp.207-221 - ACS Symposium Series 462, 1991).

Ainsi, les comportements rhéologiques des épaississants HEUR et HASE peuvent varier considérablement alors que les groupements hydrophobes fonctionnels sont identiques. On peut résumer les comportements des différents épaississants du marché de la manière suivante :

| Epaississant | Epaississement associatif | Epaississement non associatif | Poids moléculaire typique |
|---|---|---|---|
| HEUR | oui | Négligeable | < 50 000 g/mol |
| ASE | non | Oui | 100 000 - 1 000 000 g/mol |
| HASE | oui | Oui | |
| HEC | non | Oui | 3 000 - 100 000 g/mol |
| HMHEC | oui | Oui | |

Coatex est à l'origine de nombreux travaux de recherche sur les épaississants pour peinture. Par ailleurs, Coatex commercialise les produits de la gamme Coapur®, par exemple les produits Coapur® XS, qui sont des épaississants non ioniques polyuréthanes procurant des profils rhéologiques qui varient entre le type newtonien (viscosité faible à gradient de cisaillement bas) et/ou le type pseudoplastique (viscosité élevée à bas gradient de cisaillement).

De tels produits non ioniques présentent l'avantage de développer un pouvoir épaississant moins dépendant du pH de la formulation que les épaississants de type HASE.

Le document WO 02/102868 (Coatex), par exemple, concerne des polyuréthanes épaississants de type polymère à chaînes d'oxydes d'éthylènes qui comportent en bouts de chaînes des groupements hydrophobes comportant plusieurs cycles aromatiques, notamment le distyrylphényle et le tristyrylphényle. De tels épaississants permettent d'obtenir une viscosité élevée à bas gradient de cisaillement et une bonne compatibilité pigmentaire quelque soit le type de peinture (mate ou satinée).

Le document WO 2006/048539 (Coatex) décrit des épaississants de type HASE présentant un groupement hydrophobe de type alkyle pouvant contenir jusqu'à 32 atomes de carbone ou de type aromatique pouvant contenir plus de 50 atomes de carbone permettant d'obtenir un bon comportement dynamique (viscosité élevée à gradient de cisaillement élevé) et un bon comportement statique (viscosité élevée à gradient de cisaillement faible).

Les inventeurs ont mis au point un polyuréthane épaississant qui permet d'augmenter très notablement la viscosité à haut gradient de cisaillement et de conférer, ainsi, à la composition aqueuse qui le contient un bon comportement dynamique, c'est-à-dire une viscosité élevée à gradient de cisaillement élevé, tout en maintenant une très bonne compatibilité pigmentaire. Cet épaississant peut être classé dans la catégorie des épaississants de type newtoniens ou « ICI builders ».

Ce nouvel épaississant peut, par exemple, être utilisé seul dans une composition aqueuse de peinture où il est nécessaire d'avoir une viscosité élevée à haut gradient de cisaillement (par exemple une peinture satinée ou brillante comportant une teneur en latex élevée).

Il peut également être utilisé en combinaison avec un épaississant de type pseudoplastique. Une telle combinaison permet, ainsi, d'obtenir une composition aqueuse présentant un bon comportement dynamique lié à la présence de l'épaississant newtonien et un bon comportement statique lié à la présence de l'épaississant de type pseudoplastique.

Un tel épaississant peut être formulé en phase aqueuse et, du fait de sa structure particulière, il permet un épaississement de la composition aqueuse finale sans nécessiter d'équipement particulier ou d'énergie de cisaillement élevée.

Ce nouvel épaississant présente en bouts de chaînes des groupements hydrophobes de type bicycloheptenyls, éventuellement polyalkoxylés.

Le document WO 2011/100071 décrit des polymères modificateurs de rhéologie pour systèmes aqueux, notamment des formulations de shampoings ou de gels douches. Les épaississants décrits, de type épaississants acryliques, peuvent contenir notamment de l'acrylate d'éthyle (EA), de l'acide méthacrylique (MAA) et des unités monomériques comprenant un groupement bicycloheptyl-polyéther ou bicycloheptenyl -polyéther. De tels polymères acryliques présentent un profil rhéologique différent de celui des épaississants de la présente invention ; à savoir, ils entrent dans la catégorie des épaississants acryliques de type pseudoplastique (viscosité élevée à bas gradient de cisaillement).

Le document US 2011-243873 divulgue des polymères épaississants HASE à base d'acide méthacrylique, d'acrylate d'éthyle et de polyéther alkyl hydrophobe. Ces copolymères ont un comportement rhéologique différent de celui des composés polyuréthanes selon l'invention.

## DEFINITIONS

Dans la description de la présente invention, le terme « HEUR » est un acronyme pour « Hydrophobically modified Ethyoxylated URethane».

Dans la description de la présente invention, à moins qu'il n'en soit indiqué autrement, les pourcentages exprimés représentent des pourcentages en poids et sont exprimés par rapport au poids total de l'élément de référence. Par exemple, lorsqu'il est indiqué qu'un polymère comprend 10 % d'un monomère ou d'un réactif, il est entendu que le polymère comprend 10 % en poids de ce monomère ou réactif par rapport au poids total de ce polymère.

Dans la description de la présente invention, l'expression « au moins un » désigne un ou plusieurs composés (par exemple un ou plusieurs composés bicycloheptenyls, un ou plusieurs polyols, un ou plusieurs polyisocyanates), tels qu'un mélange de 2 à 5 composés.

Par « alkyle », on entend un groupe $C_xH_{2x+1}$, linéaire ou ramifié, où x varie de 1 à 30, de préférence de 10 à 30, voire de 12 à 28.

Par « formulation », on entend l'entité intermédiaire épaississante comprenant l'agent polyuréthane selon l'invention, formulé pour être plus facile à utiliser dans la composition finale à épaissir. Par exemple, l'agent épaississant selon l'invention peut être formulé en présence d'eau et de tensioactifs, pour être plus facilement coulable/versable (en anglais « pourable ») et plus facile à incorporer dans la composition à épaissir à température ambiante. La viscosité de la formulation, avant son incorporation dans la composition aqueuse finale est par exemple inférieure à 10 000 mPa.s à 25°C et à 100 tours par minute.

Par « composition », on entend l'entité finale à épaissir ou épaissie comprenant l'agent polyuréthane selon l'invention, éventuellement formulé en présence par exemple d'eau et d'agents tensioactifs, ainsi que l'ensemble de

ses constituants dont la liste dépend de l'application finale. Par exemple, la composition finale comprend des pigments minéraux et des liants, s'il s'agit d'une composition de peinture.

## DESCRIPTION DETAILLEE DE L'INVENTION

Les polyuréthanes utilisés dans la présente invention sont des épaississants pour compositions aqueuses, par exemple compositions aqueuses de peinture. Ils permettent d'obtenir des viscosités élevées à haut gradient de cisaillement et de conférer, ainsi, aux compositions un bon comportement dynamique. Ces polyuréthanes épaississants peuvent être classés dans la catégorie des épaississants de type newtoniens ou « ICI builders ».

Certaines compositions de peinture, par exemple les peintures satinées ou brillantes qui contiennent peu de pigments (comparativement à une peinture mate par exemple) et beaucoup de latex, doivent présenter une viscosité la plus élevée possible à haut gradient de cisaillement. On parle de viscosité Cone Plan ou de viscosité ICI, notée $\mu_I$ (mPa.s). Le polyuréthane épaississant de la présente invention est tout à fait adapté à ce type de compositions aqueuses.

Le polyuréthane épaississant de la présente invention peut également être utilisé en combinaison avec un épaississant de type pseudoplastique. Une telle combinaison permet ainsi d'obtenir une composition présentant un bon comportement dynamique lié à la présence de l'épaississant newtonien et un bon comportement statique lié à la présence de l'épaississant de type pseudoplastique.

Ce nouvel épaississant présente en bouts de chaînes des groupements hydrophobes de type bicycloheptenyls, éventuellement polyalkoxylés.

### *Epaississant HEUR*

Un objet de la présente invention concerne un épaississant appartenant à la catégorie des HEUR (Hydrophobically modified Ethyoxylated URethane). Il s'agit d'un polymère épaississant associatif non ionique pour compositions aqueuses.

Les polyuréthanes épaississants ou HEUR utillisés dans la présente invention résultent de la réaction entre un réactif qui confère l'associativité et qui est constitué d'un groupe terminal hydrophobe, un composé de type polyol (par exemple poly(alkylène glycol)) et un polyisocyanate. Dans le cadre de la présente invention, on utilise les termes « réaction », « condensation » et « polycondensation » de manière équivalente.

Plus précisément, il s'agit d'un polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle

- R représente un radical bicycloheptyl ou bicycloheptenyl, éventuellement substitué par un ou plusieurs groupes alkyles, identiques ou différents, comportant entre 1 et 20 atomes de carbone,
- a égale 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 0 et 250,

b) d'au moins un polyol, par exemple d'au moins un poly(alkylène glycol) et
c) d'au moins un polyisocyanate.

Il s'agit également d'un polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle

- R représente un radical bicycloheptenyl, éventuellement substitué par un ou plusieurs groupes alkyles, identiques ou différents, comportant entre 1 et 20 atomes de carbone,

- a égale 0, 1 ou 2,
- $[(OE)_m - (OP)_n - (OB)_p]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 1 et 250,

b) d'au moins un polyol, par exemple d'au moins un poly(alkylène glycol) et
c) d'au moins un polyisocyanate.

Ce sont ces polyuréthanes qui permettent, par exemple, d'épaissir une composition de peinture à haut gradient de cisaillement (mesure de la viscosité ICI par exemple).

Le polyuréthane utilisé dans la présente invention comporte en tant que constituant a) un composé de formule (I). Un tel composé est appelé, dans le cadre de la présente invention, « composé bicycloheptenyl ». Les composés de formule (I) peuvent comporter une chaîne polyalkoxylée, elle-même constituée d'au moins 2 unités alkoxylées. Alternativement, les composés de formule (I) ne comportent pas de chaîne polyalkoxylée.

Par ailleurs, le polyuréthane comporte en tant que constituant b) un polyol qui peut être un poly(alkylène glycol).

Par « poly(alkylène glycol) », on entend un polymère d'un alkylène glycol dérivé d'un oxyde oléfinique. Les chaînes poly(alkylènes glycols) du constituant b) selon la présente invention renferment une proportion de groupes éthylènes-oxys, une proportion de groupes propylènes-oxys et/ou une proportion de groupes butylènes-oxys. Les chaînes poly(alkylènes glycols) selon la présente invention peuvent, par exemple, comprendre une proportion dominante de groupes éthylènes-oxys en association avec une proportion secondaire de groupes propylènes-oxys. Des exemples spécifiques de polymères alkylènes glycols comprennent : les poly(alkylènes glycols) ayant un poids moléculaire moyen de 1 000, 4 000, 6 000 et 10 000 g/mol, les polyéthylènes polypropylènes glycols ayant un pourcentage d'oxydes d'éthylènes compris entre 20 et 80 % en poids et un pourcentage d'oxydes de propylènes compris entre 20 et 80 % en poids.

Selon un aspect de la présente invention, les polyuréthanes résultent de la condensation notamment d'un poly(alkylène glycol) qui est le poly(éthylène glycol). Il peut s'agir, par exemple, d'un poly(éthylène glycol) dont la masse moléculaire varie entre 2 000 g/mol et 20 000 g/mol, par exemple entre 8 000 g/mol et 15 000 g/mol (bornes incluses). A titre d'exemple, on peut citer le poly(éthylène glycol) (ou PEG) de masse moléculaire 10 000 g/mol et 12 000 g/mol (bornes incluses).

Selon un autre aspect de la présente invention, les polyuréthanes résultent de la condensation de plusieurs poly(alkylènes glycols), par exemple de plusieurs poly(éthylènes glycols).

Par ailleurs, le polyuréthane comporte en tant que constituant c) au moins un polyisocyanate.

Par « polyisocyanate », on entend un composé qui comprend au moins 2 groupes fonctionnels isocyanates -N=C=O.

Selon un aspect de la présente invention, les polyuréthanes résultent de la condensation notamment d'un polyisocyanate qui est choisi dans le groupe consistant en le toluène diisocyanate, les dimères du toluène diisocyanate, les trimères du toluène diisocyanate, le 1,4-butane di-isocyanate, le 1,6-hexane diisocyanate, l'isophorone diisocyanate, le 1,3- cyclohexane diisocyanate, le 1,4- cyclohexane diisocyanate, le 4,4'diisocyanatodicyclohexylméthane, le 1-méthyl-2,4-diisocyanatocyclohexane, le diphényle méthylène diisocyanate (MDI), par exemple le 2,2'-MDI, 2,4'-MDI, 4,4'-MDI, MDI polymérique, ou leurs mélanges, le dibenzyl diisocyanate, un mélange du 1-méthyl-2,4-diisocyanatocyclohexane et du 1-méthyl-2,6-diisocyanatocyclohexane, le biuret d'hexaméthylène diisocyanate, les dimères du biuret d'hexaméthylène diisocyanate, les trimères du biuret d'hexaméthylène diisocyanate, le 2,2,4-triméthylhexaméthylene diisocyanate et un mélange d'au moins deux de ces composés.

Selon un mode de réalisation de la présente invention, le composé bicycloheptenyl de formule (I) ne comporte pas de chaîne polyalkoxylée. Ainsi, dans ce cas, les valeurs m, n et p égalent 0.

Selon un autre mode de réalisation de la présente invention, le composé bicycloheptenyl de formule (I) comporte une chaîne polyalkoxylée.

Selon un exemple de ce mode de réalisation, dans la formule (I) ci-dessous :

$$R - (CH_2)_a - [(OE)_m - (OP)_n - (OB)_p] - OH \qquad (I)$$

- m représente un nombre variant entre 1 et 250 (différent de 0) et
- n et p représentent, indépendamment l'un de l'autre, 0 ou un nombre variant entre 1 et 250 (bornes incluses),

la somme de m, n et p étant comprise entre 2 et 250, par exemple entre 2 et 150, ou par exemple entre 3 et 100.

Selon un autre exemple de ce mode de réalisation de la présente invention, dans la formule (I) ci-dessus :

- m et n représentent un nombre variant entre 1 et 250 (différent de 0) et
- p est égal à 0,

la somme de m et n étant comprise entre 2 et 250, par exemple entre 2 et 150, ou par exemple entre 3 et 100.

Selon un autre exemple de ce mode de réalisation encore, dans la formule (I) ci-dessus :

- m représente un nombre variant entre 2 et 250, par exemple entre 2 et 150, ou par exemple entre 3 et 100 et
- n et p égalent 0.

Selon cet exemple de mode de réalisation, ladite chaîne polyalkoxylée du composé de formule (I) est exclusivement constituée d'unités éthoxylées EO.

Le polyuréthane utilisé dans la présente invention comporte donc un composé de formule (I), également appelé composé bicycloheptenyl, éventuellement substitué.

Selon un mode de réalisation de la présente invention, le composé bicycloheptenyl, éventuellement polyalkoxylé, de formule (I) est tel que R représente un radical bicyclo[d.e.f]heptenyl, dans lequel d est 2, 3 ou 4, e est 1 ou 2 et f est 0 ou 1 et la somme d + e + f = 5, éventuellement substitué par un ou plusieurs groupes alkyles, identiques ou différents, comportant entre 1 et 20 atomes de carbone.

Selon un autre mode de réalisation de la présente invention, ledit composé bicycloheptenyl de formule (I) est tel que R représente un radical bicyclo[3.1.1]heptenyl, substitué par deux groupes $CH_3$.

Selon un autre mode de réalisation encore, ledit composé bicycloheptenyl de formule (I) :

$$R - (CH_2)_a - [ (OE)_m - (OP)_n - (OB)_p ] - OH \qquad (I)$$

est tel que :

- a égale 2,
- m, n et p égalent 0 et
- R représente :

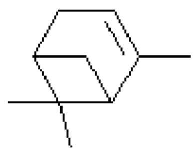

Selon ce mode de réalisation, ledit composé bicycloheptène de formule (I) est tel que :

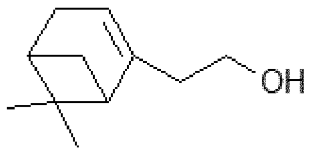

Ce composé est également connu sous le nom de Nopol ou de 2-(6,6-Dimethylbicyclo[3.1.1]hept-2-en-2-yl)éthanol.

Selon un aspect de l'invention, ledit polyuréthane résulte de la condensation de :

a) de 1 % à 29 % en poids d'au moins un composé de formule (I),
b) de 70 % à 98 % en poids d'au moins un poly(alkylène glycol) et
c) de 1 % à 29 % en poids d'au moins un polyisocyanate,

la somme de ces pourcentages massiques étant égale à 100 %.

Selon un autre aspect de l'invention, ledit polyuréthane résulte de la condensation de :

a) de 3 % à 10 % en poids d'au moins un composé de formule (I),

b) de 80 % à 94 % en poids d'au moins un poly(alkylène glycol) et
c) de 3 % à 10 % en poids d'au moins un polyisocyanate,

la somme de ces pourcentages massiques étant égale à 100 %.
Selon un mode de réalisation de la présente invention, le polyuréthane présente un profil rhéologique de type newtonien, c'est-à-dire qu'il permet d'obtenir une viscosité faible à bas gradient de cisaillement (par exemple, viscosité Brookfield). Selon ce mode de réalisation, le polyuréthane permet en outre d'obtenir une viscosité élevée à gradient de cisaillement élevé (par exemple, viscosité ICI).
La fabrication des polyuréthanes, qui appartiennent à la famille des épaississants de type HEUR, est connue de l'homme du métier qui pourra se reporter à l'enseignement des documents cités auparavant dans l'arrière plan technologique de la présente invention.
Un procédé de préparation d'un polyuréthane tel que décrit ci-dessus consiste en une condensation de ses différents constituants.

***Formulation de l'épaississant HEUR***

Le polyuréthane utilisé dans l'invention peut être formulé ou co-formulé avec d'autres constituants ou composants.
Ainsi la présente invention se rapporte à une formulation aqueuse comprenant un polyuréthane tel que décrit ci-dessus.
Cette formulation aqueuse épaississante est destinée à être incorporée dans une composition finale, par exemple une peinture, une sauce de couchage ou une composition détergente.
Le polyuréthane utilisé dans l'invention peut être co-formulé en présence d'eau.
Selon un mode de réalisation, ladite formulation aqueuse selon l'invention consiste en :

1) 5 % à 50 % en poids d'au moins un polyuréthane selon l'invention, tel que décrit ci-dessus et
2) 50 % à 95 % en poids d'eau,

la somme de ces pourcentages massiques étant égale à 100 %.
Selon un autre mode de réalisation, ladite formulation aqueuse selon l'invention consiste en :

1) 5 % à 25 % en poids d'au moins un polyuréthane selon l'invention, tel que décrit ci-dessus et
2) 75 % à 95 % en poids d'eau,

la somme de ces pourcentages massiques étant égale à 100 %.
Le polyuréthane utilisé dans l'invention peut être co-formulé dans l'eau, en présence d'au moins un agent tensioactif. Cet agent tensioactif permet de formuler l'épaississant sous forme d'une solution aqueuse liquide moins visqueuse qui peut ainsi être plus facilement mise en oeuvre par le formulateur.
Ainsi, selon un mode de réalisation de la présente invention, ladite formulation aqueuse comprend un polyuréthane, tel que décrit ci-dessus, ainsi que de l'eau et au moins un agent tensioactif.
Par « tensioactif » ou « agent tensioactif », on entend une molécule ou un polymère constitué d'au moins une partie hydrophile et d'au moins une partie hydrophobe. L'agent tensioactif utilisé dans le cadre de la présente invention peut être de nature différente, par exemple il peut être anionique ou non ionique.
Ce tensioactif peut être sélectionné parmi les classes de tensioactifs ioniques (dans ce cas de préférence anioniques) et/ou non ioniques et/ou mixtes (comportant dans la même molécule une structure non ionique et anionique). Le tensioactif préféré est composé d'au moins un tensioactif sélectionné dans la classe de tensioactifs non ioniques, éventuellement en présence d'un tensioactif anionique.
Parmi les tensioactifs anioniques convenables, on peut citer les sels de sodium, lithium, potassium, ammonium ou de magnésium dérivés des alkyles éthers sulfates avec alkyle(s) variant de C6 à C12, en configuration linéaire, iso, oxo, géminé, cyclique ou aromatique, ou des alkyles sulfates en C12, des esters alkyles phosphates ou les dialkyles sulfosuccinates. Les tensioactifs anioniques sont de préférence utilisés avec au moins un tensioactif non ionique.
Comme exemples de tensioactifs mixtes, on peut citer les sulfonates d'alkyles phénols alkoxylés. Les tensioactifs non ioniques peuvent être utilisés seuls ou en combinaison avec un tensioactif anionique. Comme exemples préférés de tensioactifs non ioniques convenables, on peut citer : les alcools en C4-C18 éthoxylés (2 à 15 OE), les alcools de Guerbet en C4-C18 éthoxylés (2 à 40 OE), les alcools monobranchés en C10-C18 éthoxylés (2 à 40 OE), les esters de sorbitol en C18, les esters de sorbitol éthoxylés (2 à 20 motifs OE), les acides en C4-C18 éthoxylés (inférieur à 15 OE), l'huile de ricin éthoxylée (30 à 40 OE), l'huile de ricin hydrogénée éthoxylée (7 à 60 OE), les esters tels que le palmitate de glycérol, le stéarate de glycérol, le stéarate d'éthylène glycol, le stéarate de diéthylène glycol, le stéarate de propylène

glycol, le stéarate de polyéthylène glycol 200 et les esters en C18 éthoxylés (2 à 15 OE). Les chaînes hydrophobes peuvent correspondre à des structures linéaires, iso, oxo, cycliques ou aromatiques.

Selon un mode de réalisation, la formulation comprend au moins un tensioactif non ionique éventuellement combiné avec au moins un tensioactif anionique, à une teneur totale en poids allant de 0,1 à 40 % en poids, par exemple de 5 à 20 % en poids ou de 10 à 17 % en poids. Dans ce cas, le rapport en poids entre les deux agents tensioactifs peut, par exemple, varier entre 25/75 et 75/25.

Selon un mode de réalisation de la présente invention, le polyuréthane de la présente invention est formulé en présence de plus de deux agents tensioactifs, par exemple trois ou quatre.

Selon un mode de réalisation, ladite formulation aqueuse selon l'invention consiste en :

1) 2 % à 50 % en poids d'au moins un polyuréthane selon l'invention, tel que décrit ci-dessus, de préférence 5 % à 30 % en poids,
2) 0,1 % à 40 % en poids d'au moins un agent tensioactif, de préférence 5 % à 30 % en poids et
3) 10 % à 93 % en poids d'eau, de préférence 40 % à 85 % en poids,

la somme de ces pourcentages massiques étant égale à 100 %.

Le polyuréthane utilisé dans l'invention peut être formulé dans un solvant miscible à l'eau. La raison principale de l'ajout d'un co-solvant organique est d'abaisser la viscosité de ce polyuréthane dans l'eau, afin de faciliter la manipulation. Le polyuréthane est, par exemple, formulé avec un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

Deux exemples particuliers de solvant organique miscible à l'eau sont :

- l'éther de diéthylène glycol monobutylique (également connu sous le nom de Butyl Carbitol™) ou d'éthylène ou de propylène glycol, et
- l'éther de butylène glycol.

La viscosité du polyuréthane en l'état, avant son incorporation dans une composition de peinture par exemple, est préférentiellement inférieure à 10 000 mPa.s à 25°C et à 100 tours par minute, de sorte qu'il est plus facile à verser à partir du récipient de stockage et plus rapidement incorporé dans la composition à épaissir à température ambiante. Le solvant miscible à l'eau choisi pour de telles compositions commerciales a, jusqu'à ce jour, exclusivement été un solvant organique.

Le polyuréthane utilisé dans l'invention peut être co-formulé dans l'eau, en présence d'un agent de coalescence. De manière équivalente à un solvant, l'agent de coalescence permet de formuler l'épaississant sous forme d'une solution aqueuse liquide moins visqueuse qui peut ainsi être plus facilement mise en oeuvre par le formulateur.

Selon un mode de réalisation, ladite formulation aqueuse selon l'invention consiste en :

1) 5 % à 50 % en poids d'au moins un polyuréthane selon l'invention, tel que décrit ci-dessus,
2) 5 % à 30 % en poids d'au moins un solvant et/ou agent de coalescence et
3) 20 % à 75 % en poids d'eau,

la somme de ces pourcentages massiques étant égale à 100 %.

Selon un aspect de l'invention, la formulation aqueuse comprend, en outre, au moins un additif sélectionné dans le groupe consistant en un biocide, un solvant, un agent anti-mousse, un régulateur de pH, un agent de coalescence, un agent encapsulant et leurs mélanges.

Par « biocide », on entend une substance chimique destinée à détruire, repousser ou rendre inoffensifs les organismes nuisibles, à en prévenir l'action ou à les combattre de toutes autres manières, par une action chimique ou biologique.

Par « agent anti-mousse », on entend une substance ou une formulation destinée à détruire les bulles d'air au sein d'un milieu liquide homogène ou hétérogène (ou à sa surface) ou à prévenir leur formation.

Par « régulateur de pH » ou « agent régulateur de pH », on entend un composé chimique qui permet d'ajuster le pH à la valeur attendue. Par exemple, l'agent régulateur de pH peut augmenter le pH, c'est le cas des bases, telles que NaOH. Alternativement, l'agent régulateur de pH peut diminuer le pH, c'est le cas des acides.

Par « agent de coalescence », on entend un agent utilisé dans les peintures qui permet d'abaisser la température minimum de formation du film (TMFF ou MFFT pour Minimum Film Formation Température) de peinture à une température adaptée aux conditions d'application souhaitées (par exemple une TMFF de 5°C pour une application à l'extérieur). A titre d'exemples d'agents coalescents selon l'invention, on peut citer le propylène glycol, le butyl glycol, le 2,2,4-triméthyl-1,3-pentanediol monoisobutyrate ou le 2,2,4-triméthyl-1,3-pentanediol diisobutyrate, le 2,2,4-triméthyl-1,3-pentanediol

monoisobutyrate, les dérivés d'éthers de glycol de type Dowanol®.

Par « agent encapsulant », on entend un agent créant un environnement hydrophobe, par exemple une cage de solvatation. On cite, en particulier comme agent encapsulant, la cyclodextrine.

Selon un mode de réalisation, ladite formulation aqueuse selon l'invention consiste en :

1) 2 % à 50 % en poids d'au moins un polyuréthane selon l'invention, tel que décrit ci-dessus, de préférence 2 % à 30 % en poids,
2) 0,1 % à 40 % en poids d'au moins un agent tensioactif, de préférence 5 % à 30 % en poids,
3) 10 % à 93 % en poids d'eau, de préférence 40 % à 85 % en poids et
4) 0 à 5 % en poids d'au moins un autre additif choisi dans le groupe consistant en un biocide, un solvant, un agent anti-mousse, un régulateur de pH, un agent de coalescence, un agent encapsulant et leurs mélanges, de préférence 0,5 % à 4 % en poids,

la somme de ces pourcentages massiques étant égale à 100 %.

***<u>Composition aqueuse finale</u>***

Un objet de la présente invention consiste en une composition aqueuse comprenant un polyuréthane tel que décrit ci-dessus ou une formulation aqueuse épaississante selon l'invention, ladite composition aqueuse finale étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

Ladite composition est épaissie au moyen d'un polyuréthane tel que décrit ci-dessus ou d'une formulation aqueuse épaississante selon l'invention.

Par ailleurs, la présente invention concerne également l'utilisation d'un polyuréthane tel que décrit ci-dessus ou d'une composition aqueuse épaississante selon l'invention, pour épaissir une composition aqueuse, ladite composition aqueuse étant sélectionnée dans le groupe consistant en une laque, un vernis, une peinture, un enduit, un crépis, un revêtement épais, un revêtement d'imperméabilisation, une encre, une suspension minérale (slurry), une sauce de couchage papetière, une formulation cosmétique et une formulation détergente.

Selon un mode de réalisation, la composition aqueuse à épaissir est de type peinture brillante, peinture semi-brillante, peinture satinée, ou toutes autres peintures à basse concentration pigmentaire volumique (CPV).

La « concentration pigmentaire volumique » est définie par la formule suivante :

$$CPV\ (\%) = 100\ x\ V_c / (V_c + V_l)$$

avec $V_c$ qui représente le volume des charges minérales et
$V_l$ qui représente le volume de liants dans la formulation de peinture.

Selon un autre mode de réalisation, la composition aqueuse à épaissir est de type peinture à moyenne ou haute concentration pigmentaire volumique (CPV), variant entre la peinture *egg-shell* ou coquille d'oeuf et la peinture mate. Dans ce cas, l'épaississant polyuréthane de la présente invention peut être associé à un autre épaississant présentant un profil pseudoplastique.

Selon un aspect de la présente invention, la composition aqueuse comprend de 0,02 à 5 % en poids de matière active dudit épaississant.

Selon un autre aspect de la présente invention, la formulation aqueuse comprend de 0,05 à 2 % en poids de matière active dudit épaississant.

Par « poids de matière active », on entend le poids sec de polyuréthane selon l'invention, indépendamment des ingrédients de co-formulation.

Selon un autre aspect encore de la présente invention, la formulation aqueuse comprend au moins une charge minérale sélectionnée dans le groupe consistant en le carbonate de calcium, le kaolin, le talc et le silicate et/ou au moins un pigment sélectionné dans le groupe consistant en le dioxyde de titane, l'oxyde de fer et le zinc.

Selon un aspect de l'invention, la formulation aqueuse est une peinture et comprend au moins un agent dispersant, au moins une charge ou un pigment minéral, au moins un liant, au moins un biocide, au moins un agent anti-mousse et éventuellement un agent tensioactif, un agent de surface et/ou un agent de coalescence, un solvant.

Les exemples qui suivent permettent de mieux appréhender la présente invention, sans en limiter la portée.

**EXEMPLE**

On détermine la viscosité des formulations de test ou des formulations de peinture à différents gradients de vitesse :

- à faible gradient de vitesse, la viscosité Brookfield qui est mesurée à l'aide d'un viscosimètre Brookfield type RVT, dans le flacon non agité, à une température de 25°C et à deux vitesses de rotation de 10 et 100 tours par minute avec le mobile adéquat. La lecture est effectuée après 1 minute de rotation. On obtient ainsi 2 mesures de viscosité Brookfield respectivement notées $\mu_{Bk10}$ et $\mu_{Bk100}$ (mPa.s),
- à moyen gradient de vitesse : la viscosité Stormer, notée $\mu_S$ (Krebs Units) et
- à haut gradient de vitesse : la viscosité Cone Plan ou viscosité ICI, notée $\mu_I$ (mPa.s).

**Exemple 1**

Cet exemple illustre l'utilisation d'un épaississant selon l'invention dans une formulation de peinture satinée, aqueuse, sans solvant, dont la constitution est donnée dans le tableau 1 ci-dessous.

Il illustre le pouvoir épaississant d'un polyuréthane selon l'invention (essai 1-4), mettant en oeuvre un composé de formule (I). Parallèlement, cet exemple illustre aussi des polyuréthanes hors invention (essais 1-1 à 1-3).

Essai 1-1 (hors invention)

Ledit polyuréthane résulte de la condensation de, exprimé en % en poids par rapport au poids total du polyuréthane :

- 2,7 % en poids d'un alcool en C8 linéaire,
- 92,8 % en poids de PEG 10 000 et
- 4,5 % en poids d'isophorone diisocyanate (IPDI).

Essai 1-2 (hors invention)

Ledit polyuréthane résulte de la condensation de, exprimé en % en poids par rapport au poids total du polyuréthane :

- 4,6 % en poids d'un alcool en C11 linéaire,
- 89,4 % en poids de PEG 10 000 et
- 6,0 % en poids d'isophorone diisocyanate (IPDI).

Essai 1-3 (hors invention)

Ledit polyuréthane résulte de la condensation de, exprimé en % en poids par rapport au poids total du polyuréthane :

- 4,2 % en poids d'un composé iso bornéol (un composé cyclique sans insaturation et sans bras espaceur),
- 89,8 % en poids de PEG 10 000 et
- 6,0 % en poids d'isophorone diisocyanate (IPDI).

Essai 1-4 (selon l'invention)

Ledit polyuréthane résulte de la condensation de, exprimé en % en poids par rapport au poids total du polyuréthane :

- 4,5 % en poids d'un composé bicycloheptène de formule :

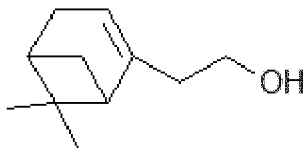

(Nopol ou 2-(6,6-Dimethylbicyclo[3.1.1]hept-2-en-2-yl)éthanol),
- 89,5 % en poids de PEG 10 000 et
- 6,0 % en poids d'isophorone diisocyanate (IPDI).

Les quatre polyuréthanes sont formulés dans l'eau en présence d'un tensioactif qui est une coupe C8-C10 d'un alcool gras alkoxylé (Simulsol®OX1008). Les ratios PU/tensioactif/eau sont 20/5/75. La composition de peinture comprenant 44g de polyuréthane pour un poids total de 1 000 g de peinture (voir Tableau 1), la dose d'épaississant dans la composition finale est de 0,88 % actif (ou de matière active) en poids compte tenu de la formulation des épaississants testés (tensioactifs et eau).

Tous les résultats ont été regroupés dans le tableau 2 ci-dessous.

Pour chacun des essais, on a déterminé les viscosités $\mu_{Bk10}$, $\mu_{Bk100}$, $\mu_I$ (en mPa.s) et $\mu_S$ (en Krebs Units KU mesurées avec le module standard), selon les méthodes décrites ci-dessus à T = 0 et à T = 24 h à température ambiante.

**Tableau 1**

| Constituant de la peinture - Masse (g) | |
|---|---|
| Eau | 191 |
| Dispersant (Coadis® BR3) | 6 |
| Biocide (Acticide® MBS) | 2 |
| Agent anti-mousse (Airex® 901W) | 2 |
| $TiO_2$ (RHD2) | 188 |
| $CaCO_3$ (Omyacoat® 850OG) | 130 |
| Liant (Acronal 290D) | 416 |
| Mono propylène glycol | 10 |
| Texanol | 10 |
| Agent anti-mousse (Tego® 825) | 1 |
| ***Epaississant PU (selon les essais)*** | 44 |

**Tableau 2**

| Résultats | | | | | |
|---|---|---|---|---|---|
| | | Essai 1-1 | Essai 1-2 | Essai 1-3 | Essai 1-4 |
| | | HInv | HInv | HInv | Inv |
| T = 0 | $\mu_{Bk10}$ | 2 040 | 13 500 | 1 000 | 2 600 |
| | $\mu_{Bk100}$ | 1 108 | 7 390 | 514 | 1 428 |
| | $\mu_S$ | 83 | 141 | 66 | 89 |
| | $\mu_I$ | 2,3 | 3,5 | 1,5 | 3,0 |
| T = 24 h | $\mu_{Bk10}$ | 2 320 | 18 000 | 1 040 | 3 080 |
| | $\mu_{Bk100}$ | 1 324 | 11 080 | 589 | 1 816 |
| | $\mu_S$ | 88 | 142 | 70 | 97 |
| | $\mu_I$ | 2,4 | 3,5 | 1,5 | 3,1 |
| HInv : Hors Invention<br>Inv : Selon l'Invention | | | | | |

On constate un épaississement significativement amélioré à haut gradient de vitesse ($\mu_I$) dans la formulation de peinture selon l'essai 1-4 (selon l'invention), comparativement à celle de l'essai 1-1 et de l'essai 1-3 (hors invention).

Le polyuréthane de l'essai 1-2 génère une viscosité ICI élevée, mais elle est couplée à des viscosités trop

élevées à bas et à moyen gradients de vitesse. Le profil de ce polyuréthane n'est pas suffisamment newtonien.

Le polyuréthane selon la présente invention présente un profil rhéologique de type newtonien : viscosité élevée à gradient de cisaillement élevé et viscosité faible à bas gradient de cisaillement.

**Exemple 2**

Cet exemple illustre l'utilisation d'un épaississant hors invention, de type HASE, dans une formulation de peinture satinée, aqueuse, sans solvant, dont la constitution est la même que celle de l'exemple 1 ci-dessus.

Essai 2-1 (hors invention)

Cet essai met en oeuvre un épaississant acrylique HASE constitué de, exprimé en % en poids par rapport au poids total du composé :
- 37,9 % en poids d'acide méthacrylique ;
- 54,8 % en poids d'acrylate d'éthyle ; et
- 7,3 % en poids d'un monomère qui est un méthacrylate éthoxylé qui comporte en bout de chaîne un composé bicycloheptène de type Nopol ou 2-(6,6-Dimethylbicyclo[3.1.1]hept-2-en-2-yl)éthanol, la formule de ce monomère pouvant être représentée de la manière suivante :

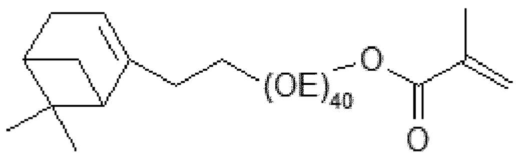

**Tableau 3**

| Résultats | | |
|---|---|---|
| | | Essai 2-1 |
| | | Dose : 0,17 % actif |
| | | HInv |
| T = 0 | $\mu_{Bk10}$ | 13 800 |
| | $\mu_{Bk100}$ | 3 250 |
| | $\mu_S$ | 104 |
| | $\mu_I$ | 0,4 |
| T = 24 h | $\mu_{Bk10}$ | 33 400 |
| | $\mu_{Bk100}$ | 5 740 |
| | $\mu_S$ | 119 |
| | $\mu_I$ | 0,4 |

L'épaississant HASE selon cet essai présente un profil rhéologique de type pseudoplastique : viscosité élevée à bas gradient de cisaillement. Il ne répond pas aux objets de la présente invention, c'est-à-dire conférer, ainsi, à la composition aqueuse qui le contient un bon comportement dynamique, c'est-à-dire une viscosité élevée à gradient de cisaillement élevé.

**Revendications**

**1.** Composition aqueuse comprenant un agent épaississant polyuréthane choisi parmi

• un agent épaississant polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle :

- R représente un radical bicycloheptyl ou bicycloheptenyl, éventuellement substitué par un ou plusieurs groupes alkyles, identiques ou différents, comportant entre 1 et 20 atomes de carbone,
- a égale 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 0 et 250,

b) d'au moins un polyol, par exemple d'au moins un poly(alkylène glycol) et
c) d'au moins un polyisocyanate ; et

• un agent épaississant polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle :

- R représente un radical bicycloheptyl ou bicycloheptenyl, éventuellement substitué par un ou plusieurs groupes alkyles, identiques ou différents, comportant entre 1 et 20 atomes de carbone,
- a égale 0, 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 1 et 250,

b) d'au moins un polyol, par exemple d'au moins un poly(alkylène glycol) et
c) d'au moins un polyisocyanate.

**2.** Composition aqueuse selon la revendication 1, dans laquelle ledit composé bicycloheptenyl, éventuellement polyalkoxylé, de formule (I) dudit agent épaississant polyuréthane est tel que R représente un radical bicyclo[d.e.f] heptenyl, dans lequel d est 2, 3 ou 4, e est 1 ou 2 et f est 0 ou 1 et la somme d + e + f = 5, éventuellement substitué par un ou plusieurs groupes alkyles, identiques ou différents, comportant entre 1 et 20 atomes de carbone.

**3.** Composition aqueuse selon la revendication 1 ou 2, dans laquelle ledit composé bicycloheptenyl, de formule (I), dudit agent épaississant polyuréthane, est tel que :

- a égale 2,
- m, n et p égalent 0 et
- R représente :

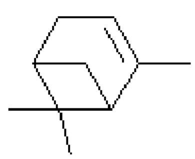

**4.** Composition aqueuse selon l'une quelconque des revendications précédentes, dans laquelle ledit agent épaississant polyuréthane résulte de la condensation de :

a) de 1 % à 29 % en poids d'au moins un composé de formule (I),
b) de 70 % à 98 % en poids d'au moins un poly(alkylène glycol) et
c) de 1 % à 29 % en poids d'au moins un polyisocyanate,

la somme de ces pourcentages massiques étant égale à 100 %.

**5.** Composition aqueuse selon l'une quelconque des revendications précédentes, selon laquelle le poly(alkylène glycol) dudit agent épaississant polyuréthane est un poly(éthylène glycol) dont la masse moléculaire varie entre 2 000 g/mol et 20 000 g/mol.

**6.** Composition aqueuse selon l'une quelconque des revendications précédentes, selon laquelle ledit agent épaississant polyuréthane se trouve sous forme d'une formulation aqueuse comprenant en outre de l'eau et au moins un agent tensioactif.

**7.** Composition aqueuse selon la revendication 6, selon laquelle ladite formulation aqueuse comprend, en outre, au moins un additif sélectionné dans le groupe consistant en un biocide, un solvant, un agent anti-mousse, un régulateur de pH, un agent de coalescence, un agent encapsulant et leurs mélanges.

**8.** Composition aqueuse selon la revendication 6 ou 7, selon laquelle ladite formulation aqueuse consiste en :

1) 2 % à 50 % en poids d'au moins un polyuréthane selon l'une quelconque des revendications 1 à 5,
2) 0,1 % à 40 % en poids d'au moins un tensioactif,
3) 10 % à 93 % en poids d'eau et
4) 0 à 5 % en poids d'au moins un autre additif choisi dans le groupe consistant en un biocide, un solvant, un agent anti-mousse, un régulateur de pH, un agent de coalescence, un agent encapsulant et leurs mélanges,

la somme de ces pourcentages massiques étant égale à 100 %.

**9.** Composition aqueuse selon l'une quelconque des revendications précédentes, ladite composition étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

**10.** Composition aqueuse selon l'une quelconque des revendications précédentes, ladite composition comprenant en outre au moins un additif sélectionné dans le groupe consistant en un biocide, un solvant, un agent anti-mousse, un régulateur de pH, un agent de coalescence, un agent encapsulant et leurs mélanges.

**11.** Composition aqueuse selon l'une quelconque des revendications 1 à 9, ladite composition comprenant en outre au moins une charge minérale sélectionnée dans le groupe consistant en le carbonate de calcium, le kaolin, le talc et le silicate et/ou au moins un pigment sélectionné dans le groupe consistant en le dioxyde de titane, l'oxyde de fer et le zinc.

**12.** Composition aqueuse selon l'une quelconque des revendications 1 à 9 qui est une peinture et qui comprend au moins un agent dispersant, au moins une charge ou un pigment minéral, au moins un liant, au moins un biocide, au moins un agent anti-mousse et éventuellement un agent tensioactif, un agent de surface et/ou un agent de coalescence, un solvant.

**13.** Utilisation d'un polyuréthane choisi parmi :

• un polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle :

- R représente un radical bicycloheptyl ou bicycloheptenyl, éventuellement substitué par un ou plusieurs

groupes alkyles, identiques ou différents, comportant entre 1 et 20 atomes de carbone,
- a égale 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 0 et 250,

b) d'au moins un polyol, par exemple d'au moins un poly(alkylène glycol) et
c) d'au moins un polyisocyanate ; et

• un polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle :

- R représente un radical bicycloheptyl ou bicycloheptenyl, éventuellement substitué par un ou plusieurs groupes alkyles, identiques ou différents, comportant entre 1 et 20 atomes de carbone,
- a égale 0, 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 1 et 250,

b) d'au moins un polyol, par exemple d'au moins un poly(alkylène glycol) et
c) d'au moins un polyisocyanate

ledit polyuréthane se trouvant éventuellement sous forme d'une formulation aqueuse avec de l'eau et au moins un agent tensioactif,
pour épaissir une composition aqueuse, ladite composition étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

**14.** Utilisation d'un polyuréthane choisi parmi

• un polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] - OH \qquad (I)$$

dans laquelle :

- R représente un radical bicycloheptyl ou bicycloheptenyl, éventuellement substitué par un ou plusieurs groupes alkyles, identiques ou différents, comportant entre 1 et 20 atomes de carbone,
- a égale 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 0 et 250,

b) d'au moins un polyol, par exemple d'au moins un poly(alkylène glycol) et

c) d'au moins un polyisocyanate ; et

• un polyuréthane résultant de la condensation :

a) d'au moins un composé bicycloheptyl ou bicycloheptenyl, éventuellement polyalkoxylé, de formule (I) :

$$R - (CH_2)_a - [ (OE)_m - (OP)_n - (OB)_p ] -OH \qquad (I)$$

dans laquelle :

- R représente un radical bicycloheptyl ou bicycloheptenyl, éventuellement substitué par un ou plusieurs groupes alkyles, identiques ou différents, comportant entre 1 et 20 atomes de carbone,
- a égale 0, 1 ou 2,
- $[ (OE)_m - (OP)_n - (OB)_p ]$ représente une chaîne polyalkoxylée constituée d'unités alkoxylées, réparties en blocs, alternées ou statistiques, choisies parmi les unités éthoxylées EO, les unités propoxylées OP et les unités butoxylées OB et
- m, n et p représentent, indépendamment les uns des autres, 0 ou un nombre variant entre 1 et 250 (bornes incluses), la somme de m, n et p étant comprise entre 1 et 250,

b) d'au moins un polyol, par exemple d'au moins un poly(alkylène glycol) et
c) d'au moins un polyisocyanate

ledit polyuréthane se trouvant éventuellement sous forme d'une formulation aqueuse avec de l'eau et au moins un agent tensioactif,
pour augmenter les viscosités à haut gradient de cisaillement d'une composition aqueuse de peinture.

**Patentansprüche**

**1.** Wässrige Zusammensetzung aus einem Polyurethanverdickungsmittel, ausgewählt aus

• einem Polyurethanverdickungsmittel, hergestellt durch die Kondensation von:

a) mindestens einer, möglicherweise polyalkoxylierten, Bicycloheptyl- oder Bicycloheptenyl-Verbindung mit der Formel (I):

$$R - (CH_2)_a - [ (EO)_m - (PO)_n - (BO)_p ]- OH \qquad (I)$$

wobei:

- R ein Bicycloheptyl- oder Bicycloheptenylradikal darstellt, gegebenenfalls ersetzt durch eine oder mehrere, identische oder unterschiedliche, Alkylgruppen mit 1 bis 20 Kohlenstoffatomen,
- a gleich 1 oder 2 ist,
- $[ (EO)_m - (PO)_n - (BO)_p ]$ eine polyalkoxylierte Kette aus alkoxylierten Gruppen darstellt, die in alternierende oder statistische Blöcke aufgeteilt sind, ausgewählt aus ethoxylierten EO-Gruppen, propoxylierten PO-Gruppen und butoxylierten BO-Gruppen, und
- m, n und p, unabhängig voneinander, 0 oder eine Zahl zwischen 1 und 250 (einschließlich Grenzen) darstellen, wobei die Summe aus m, n und p zwischen 0 und 250 liegt,

b) mindestens einem Polyol, zum Beispiel mindestens einem Poly(alkylenglykol) und
c) mindestens einem Polyisocyanat; und

• einem Polyurethanverdickungsmittel, hergestellt durch die Kondensation von:

a) mindestens einer, möglicherweise polyalkoxylierten, Bicycloheptyl- oder Bicycloheptenylverbindung mit der Formel (I):

$$R - (CH_2)_a - [ (EO)_m - (PO)_n - (BO)_p ] - OH \qquad (I)$$

wobei:

- R ein Bicycloheptyl- oder Bicycloheptenylradikal darstellt, gegebenenfalls ersetzt durch eine oder mehrere, identische oder unterschiedliche, Alkylgruppen mit 1 bis 20 Kohlenstoffatomen,
- a gleich 0, 1 oder 2 ist,
- [ $(EO)_m$ - $(PO)_n$ - $(BO)_p$ ] eine polyalkoxylierte Kette aus alkoxylierten Gruppen darstellt, die in alternierende oder statistische Blöcke aufgeteilt sind, ausgewählt aus ethoxylierten EO-Gruppen, propoxylierten PO-Gruppen und butoxylierten BO-Gruppen, und
- m, n und p, unabhängig voneinander, 0 oder eine Zahl zwischen 1 und 250 (einschließlich Grenzen) darstellen, wobei die Summe aus m, n und p zwischen 1 und 250 liegt,

b) mindestens einem Polyol, zum Beispiel mindestens einem Poly(alkylenglykol) und
c) mindestens einem Polyisocyanat.

**2.** Wässrige Zusammensetzung nach Anspruch 1, wobei diese, möglicherweie polyalkoxylierte, Bicycloheptenylverbindung mit der Formel (I) des Polyurethanverdickungsmittels so ausgewählt ist, dass R ein Bicyclo[d.e.fJheptenyl-Radikal darstellt, wobei d 2, 3 oder 4, e 1 oder 2 und f 0 oder 1 entspricht und die Summe d + e + f = 5 ist, gegebenenfalls ersetzt durch eine oder mehrere, identische oder unterschiedliche, Alkylgruppen mit 1 bis 20 Kohlenstoffatomen.

**3.** Wässrige Zusammensetzung nach Anspruch 1 oder 2, wobei diese Bicycloheptenylverbindung mit der Formel (I) dieses Polyurethanverdickungsmittels so ausgewählt ist, dass:

- a gleich 2 ist,
- m, n und p gleich 0 sind und
- R wie folgt dargestellt wird:

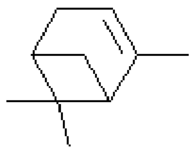

**4.** Wässrige Zusammensetzung nach einem beliebigen der vorstehenden Ansprüche, mit dem Polyurethanverdickungsmittel, hergestellt durch die Kondensation von:

a) 1 bis 29 Gew.-% mindestens einer Verbindung mit der Formel (I),
b) 70 bis 98 Gew.-% mindestens eines Poly(alkylenglykols) und
c) 1 bis 29 Gew.-% mindestens eines Polyisocyanats,

wobei die Summe dieser Massenanteile gleich 100 % ist.

**5.** Wässrige Zusammensetzung nach einem beliebigen der vorstehenden Ansprüche, wobei das Poly(alkylenglykol) dieses Polyurethanverdickungsmittels ein Poly(ethylenglykol) ist, dessen Molekülmasse zwischen 2.000 g/mol und 20.000 g/mol variiert.

**6.** Wässrige Zusammensetzung nach einem beliebigen der vorstehenden Ansprüche, wobei dieses Polyurethanverdickungsmittel in Form einer wässrigen Formulierung zusätzlich mit Wasser und mindestens einem Tensid vorliegt.

**7.** Wässrige Zusammensetzung nach Anspruch 6, wobei diese wässrige Formulierung zusätzlich mindestens einen Zusatzstoff enthält, ausgewählt aus der Gruppe bestehend aus einem Biozid, einem Lösungsmittel, einem Antischaummittel, einem pH-Regulator, einem Koaleszenzmittel, einem Verkapselungsmittel und Mischungen davon.

**8.** Wässrige Zusammensetzung nach Anspruch 6 oder 7, wobei diese wässrige Formulierung besteht aus:

1) 2 bis 50 Gew.-% mindestes eines Polyurethans nach einem beliebigen der Ansprüche 1 bis 5,
2) 0,1 bis 40 Gew.-% mindestens eines Tensids,

3) 10 bis 93 Gew.-% Wasser und
4) 0 bis 5 Gew.-% mindestens eines anderen Zusatzstoffs, ausgewählt aus der Gruppe bestehend aus einem Biozid, einem Lösungsmittel, einem Antischaummittel, einem pH-Regulator, einem Koaleszenzmittel, einem Verkapselungsmittel und Mischungen davon,

wobei die Summe dieser Massenanteile gleich 100 % ist.

**9.** Wässrige Zusammensetzung nach einem beliebigen der vorstehenden Ansprüche, wobei diese Zusammensetzung ausgewählt ist aus der Gruppe bestehend aus einem Anstrich, einem Überzug, einem Putz, einer dicken Beschichtung, einer wasserabweisenden Beschichtung, einer Lackierung, einem Lack, einer Tinte, einer mineralischen Aufschlämmung (Slurry), einer Streichmasse für die Papierindustrie, einer kosmetischen Formulierung und einer Detergensformulierung.

**10.** Wässrige Zusammensetzung nach einem beliebigen der vorstehenden Ansprüche, wobei diese Zusammensetzung zusätzlich mindestens einen Zusatzstoff enthält, ausgewählt aus der Gruppe bestehend aus einem Biozid, einem Lösungsmittel, einem Antischaummittel, einem pH-Regulator, einem Koaleszenzmittel, einem Verkapselungsmittel und Mischungen davon.

**11.** Wässrige Zusammensetzung nach einem beliebigen der vorstehenden Ansprüche 1 bis 9, wobei diese Zusammensetzung außerdem mindestens einen mineralischen Füllstoff umfasst, ausgewählt aus der Gruppe bestehend aus Calciumcarbonat, Kaolin, Talk und Silikat, und/oder mindestens ein Pigment hat, ausgewählt aus der Gruppe bestehend aus Titandioxid, Eisenoxid und Zink.

**12.** Wässrige Zusammensetzung nach einem beliebigen der vorstehenden Ansprüche 1 bis 9, wobei diese Zusammensetzung ein Anstrichmittel ist und mindestens ein Dispergiermittel, mindestens einen mineralischen Füllstoff oder ein Mineralpigment, mindestens ein Bindemittel, mindestens ein Biozid, mindestens ein Antischaummittel und gegebenenfalls ein Tensid, ein oberflächenaktives Mittel und/oder ein Koaleszenzmittel, ein Lösungsmittel hat.

**13.** Verwendung eines Polyurethans, ausgewählt aus:

• einem Polyurethan, hergestellt durch die Kondensation von:

a) mindestens einer, möglicherweise polyalkoxylierten, Bicycloheptyl- oder Bicycloheptenylverbindung mit der Formel (I):

$$R - (CH_2)_a - [ (EO)_m - (PO)_n - (BO)_p ] - OH \qquad (I)$$

wobei:

- R ein Bicycloheptyl- oder Bicycloheptenylradikal darstellt, gegebenenfalls ersetzt durch eine oder mehrere, identische oder unterschiedliche, Alkylgruppen mit 1 bis 20 Kohlenstoffatomen,
- a gleich 1 oder 2 ist,
- $[ (EO)_m - (PO)_n - (BO)_p ]$ eine polyalkoxylierte Kette aus alkoxylierten Gruppen darstellt, die in alternierende oder statistische Blöcke aufgeteilt sind, ausgewählt aus ethoxylierten EO-Gruppen, propoxylierten PO-Gruppen und butoxylierten BO-Gruppen, und
- m, n und p, unabhängig voneinander, 0 oder eine Zahl zwischen 1 und 250 (einschließlich Grenzen) darstellen, wobei die Summe aus m, n und p zwischen 0 und 250 liegt,

b) mindestens einem Polyol, zum Beispiel mindestens einem Poly(alkylenglykol) und
c) mindestens einem Polyisocyanat; und

• einem Polyurethan, hergestellt durch die Kondensation von:

a) mindestens einer, möglicherweise polyalkoxylierten, Bicycloheptyl- oder Bicycloheptenylverbindung mit der Formel (I):

$$R - (CH_2)_a - [ (EO)_m - (PO)_n - (BO)_p ] - OH \qquad (I)$$

wobei:

- R ein Bicycloheptyl- oder Bicycloheptenylradikal darstellt, gegebenenfalls ersetzt durch eine oder mehrere, identische oder unterschiedliche, Alkylgruppen mit 1 bis 20 Kohlenstoffatomen,
- a gleich 0, 1 oder 2 ist,
- [ $(EO)_m$ - $(PO)_n$ - $(BO)_p$ ] eine polyalkoxylierte Kette aus alkoxylierten Gruppen darstellt, die in alternierende oder statistische Blöcke aufgeteilt sind, ausgewählt aus ethoxylierten EO-Gruppen, propoxylierten PO-Gruppen und butoxylierten BO-Gruppen, und
- m, n und p, unabhängig voneinander, 0 oder eine Zahl zwischen 1 und 250 (einschließlich Grenzen) darstellen, wobei die Summe aus m, n und p zwischen 1 und 250 liegt,

b) mindestens einem Polyol, zum Beispiel mindestens einem Poly(alkylenglykol) und
c) mindestens einem Polyisocyanat,

wobei das Polyurethan eventuell in Form einer wässrigen Formulierung mit Wasser und mindestens einem Tensid vorliegt,
um eine wässrige Zusammensetzung zu verdicken, wobei diese Zusammensetzung ausgewählt ist aus der Gruppe bestehend aus einem Anstrich, einem Überzug, einem Putz, einer dicken Beschichtung, einer wasserabweisenden Beschichtung, einer Lackierung, einem Lack, einer Tinte, einer mineralischen Aufschlämmung (Slurry), einer Streichmasse für die Papierindustrie, einer kosmetischen Formulierung und einer Detergensformulierung.

**14.** Verwendung eines Polyurethans, ausgewählt aus

• einem Polyurethan, hergestellt durch die Kondensation von:

a) mindestens einer, möglicherweise polyalkoxylierten, Bicycloheptyl- oder Bicycloheptenylverbindung mit der Formel (I):

$$R - (CH_2)_a - [ (OE)_m - (OP)_n - (OB)_p ] - OH \qquad (I)$$

wobei:

- R ein Bicycloheptyl- oder Bicycloheptenylradikal darstellt, gegebenenfalls ersetzt durch eine oder mehrere, identische oder unterschiedliche, Alkylgruppen mit 1 bis 20 Kohlenstoffatomen,
- a gleich 1 oder 2 ist,
- [ $(EO)_m$ - $(PO)_n$ - $(BO)_p$ ] eine polyalkoxylierte Kette aus alkoxylierten Gruppen darstellt, die in alternierende oder statistische Blöcke aufgeteilt sind, ausgewählt aus ethoxylierten EO-Gruppen, propoxylierten PO-Gruppen und butoxylierten BO-Gruppen, und
- m, n und p, unabhängig voneinander, 0 oder eine Zahl zwischen 1 und 250 (einschließlich Grenzen) darstellen, wobei die Summe aus m, n und p zwischen 0 und 250 liegt,

b) mindestens einem Polyol, zum Beispiel mindestens einem Poly(alkylenglykol) und
c) mindestens einem Polyisocyanat; und

• einem Polyurethan, hergestellt durch die Kondensation von:

a) mindestens einer, möglicherweise polyalkoxylierten, Bicycloheptyl- oder Bicycloheptenylverbindung mit der Formel (I):

$$R - (CH_2)_a - [ (EO)_m - (PO)_n - (BO)_p ] - OH \qquad (I)$$

wobei:

- R ein Bicycloheptyl- oder Bicycloheptenylradikal darstellt, gegebenenfalls ersetzt durch eine oder mehrere, identische oder unterschiedliche, Alkylgruppen mit 1 bis 20 Kohlenstoffatomen,
- a gleich 0, 1 oder 2 ist,
- [ $(EO)_m$ - $(PO)_n$ - $(BO)_p$ ] eine polyalkoxylierte Kette aus alkoxylierten Gruppen darstellt, die in alternierende oder statistische Blöcke aufgeteilt sind, ausgewählt aus ethoxylierten EO-Gruppen, propoxylierten PO-Gruppen und butoxylierten BO-Gruppen, und
- m, n und p, unabhängig voneinander, 0 oder eine Zahl zwischen 1 und 250 (einschließlich Grenzen) darstellen, wobei die Summe aus m, n und p zwischen 1 und 250 liegt,

b) mindestens einem Polyol, zum Beispiel mindestens einem Poly(alkylenglykol) und
c) mindestens einem Polyisocyanat,

wobei das Polyurethan eventuell in Form einer wässrigen Formulierung mit Wasser und mindestens einem Tensid vorliegt,
um die Viskosität mit hoher Scherrate einer wässrigen Anstrichmittelzusammensetzung zu erhöhen.

## Claims

**1.** Aqueous composition comprising a polyurethane thickening agent chosen from

• a polyurethane thickening agent resulting from the condensation:

a) of at least one bicycloheptyl or bicycloheptenyl compound, which is optionally polyalkoxylated, of formula (I):

$$R - (CH_2)_a - [ (OE)_m - (OP)_n - (OB)_p ] - OH \qquad (I)$$

in which:

- R represents a bicycloheptyl or bicycloheptenyl radical, optionally substituted by one or more identical or different alkyl groups, comprising between 1 and 20 carbon atoms,
- a is equal to 1 or 2,
- $[ (OE)_m - (OP)_n - (OB)_p ]$ represents a polyalkoxyl chain consisting of alkoxyl units, distributed in blocks, alternating or random, chosen from ethoxyl OE units, propoxyl OP units and butoxyl OB units, and
- m, n and p represent, independently of one another, 0 or a number varying between 1 and 250 (limits included), the sum of m, n and p being between 0 and 250,

b) of at least one polyol, for example of at least one poly(alkylene glycol), and
c) of at least one polyisocyanate; and

• a polyurethane thickening agent resulting from the condensation:

a) of at least one bicycloheptyl or bicycloheptenyl compound, which is optionally polyalkoxylated, of formula (I):

$$R - (CH_2)_a - [ (OE)_m - (OP)_n - (OB)_p ] - OH \qquad (I)$$

in which:

- R represents a bicycloheptyl or bicycloheptenyl radical, optionally substituted by one or more identical or different alkyl groups, comprising between 1 and 20 carbon atoms,
- a is equal to 0, 1 or 2,
- $[ (OE)_m - (OP)_n - (OB)_p ]$ represents a polyalkoxyl chain consisting of alkoxyl units, distributed in blocks, alternating or random, chosen from ethoxyl OE units, propoxyl OP units and butoxyl OB units, and
- m, n and p represent, independently of one another, 0 or a number varying between 1 and 250 (limits included), the sum of m, n and p being between 1 and 250,

b) of at least one polyol, for example of at least one poly(alkylene glycol) and
c) of at least one polyisocyanate.

**2.** Aqueous composition according to claim 1, in which the said bicycloheptenyl compound, which is optionally polyalkoxylated, of formula (I) of the said polyurethane thickening agent is such that R represents a bicyclo[d.e.f]heptenyl radical in which d is 2, 3 or 4, e is 1 or 2 and f is 0 or 1 and the sum d + e + f = 5, optionally substituted by one or more identical or different alkyl groups, comprising between 1 and 20 carbon atoms.

**3.** Aqueous composition according to claim 1 or 2, in which the said bicycloheptenyl compound, of formula (I), of the said polyurethane thickening agent is such that:

- a is equal to 2,
- m, n and p are equal to 0 and
- R represents:

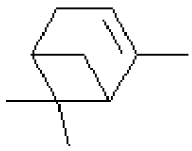

**4.** Aqueous composition according to any one of the preceding claims, in which the said polyurethane thickening agent results from the condensation of:

a) from 1% to 29% by weight of at least one compound of formula (I),
b) from 70% to 98% by weight of at least one poly(alkylene glycol) and
c) from 1% to 29% by weight of at least one polyisocyanate,

the sum of these percentages by weight being equal to 100%.

**5.** Aqueous composition according to any one of the preceding claims, according to which the poly(alkylene glycol) of the said polyurethane thickening agent is a polyethylene glycol), the molecular weight of which varies between 2,000 g/mol and 20,000 g/mol.

**6.** Aqueous composition according to any one of the preceding claims, according to which the said polyurethane thickening agent is in the form of an aqueous formulation additionally comprising water and at least one surface-active agent.

**7.** Aqueous composition according to claim 6, according to which the said aqueous formulation additionally comprises at least one additive selected from the group consisting of a biocide, a solvent, an antifoaming agent, a pH regulator, a coalescence agent, an encapsulating agent and their mixtures.

**8.** Aqueous composition according to claim 6 or 7, according to which the said aqueous formulation consists of:

1) 2% to 50% by weight of at least one polyurethane according to any one of claims 1 to 5,
2) 0.1% to 40% by weight of at least one surfactant,
3) 10% to 93% by weight of water and
4) 0% to 5% by weight of at least one other additive chosen from the group consisting of a biocide, a solvent, an antifoaming agent, a pH regulator, a coalescence agent, an encapsulating agent and their mixtures,

the sum of these percentages by weight being equal to 100%.

**9.** Aqueous composition according to any one of the preceding claims, the said composition being selected from the group consisting of a paint, a putty, a render coating, a thick coating, a waterproof coating, a lacquer, a varnish, an ink, a mineral suspension (slurry), a paper coating colour, a cosmetic formulation and a detergent formulation.

**10.** Aqueous composition according to any one of the preceding claims, the said composition comprising furthermore at least one additive chosen from the group consisting in a biocide, a solvent, an antifoaming agent, a pH regulator, a coalescence agent, an encapsulating agent and their mixtures.

**11.** Aqueous composition according to one of the claims 1 or 9, the said composition comprising furthermore at least one mineral filler selected from the group consisting of calcium carbonate, kaolin, talc and silicate and/or at least

one pigment selected from the group consisting of titanium dioxide, iron oxide and zinc.

**12.** Aqueous composition according to one of the claims 1 or 9 which is a paint and comprises at least one dispersing agent, at least one one filler or one mineral pigment, at least one binder, at least one biocide, at least one antifoaming agent and optionally one surface-active agent, a surface agent and/or a coalescence agent, a solvent.

**13.** Use of a polyurethane chosen from:

- a polyurethane resulting from the condensation:

  a) of at least one bicycloheptyl or bicycloheptenyl compound, which is optionally polyalkoxylated, of formula (I):

$$R - (CH_2)_a - [ (OE)_m - (OP)_n - (OB)_p ] - OH \qquad (I)$$

  in which:

  - R represents a bicycloheptyl or bicycloheptenyl radical, optionally substituted by one or more identical or different alkyl groups, comprising between 1 and 20 carbon atoms,
  - a is equal to 1 or 2,
  - $[ (OE)_m - (OP)_n - (OB)_p ]$ represents a polyalkoxyl chain consisting of alkoxyl units, distributed in blocks, alternating or random, chosen from ethoxyl OE units, propoxyl OP units and butoxyl OB units and
  - m, n and p represent, independently of one another, 0 or a number varying between 1 and 250 (limits included), the sum of m, n and p being between 0 and 250,

  b) of at least one polyol, for example of at least one poly(alkylene glycol), and
  c) of at least one polyisocyanate; and

- a polyurethane resulting from the condensation:

  a) of at least one bicycloheptyl or bicycloheptenyl compound, which is optionally polyalkoxylated, of formula (I):

$$R - (CH_2)_a - [ (OE)_m - (OP)_n - (OB)_p ] - OH \qquad (I)$$

  in which :

  - R represents a bicycloheptyl or bicycloheptenyl radical, optionally substituted by one or more identical or different alkyl groups, comprising between 1 and 20 carbon atoms,
  - a is equal to 0, 1 or 2,
  - $[ (OE)_m - (OP)_n - (OB)_p ]$ represents a polyalkoxyl chain consisting of alkoxyl units, distributed in blocks, alternating or random, chosen from ethoxyl OE units, propoxyl OP units and butoxyl OB units, and
  - m, n and p represent, independently of one another, 0 or a number varying between 1 and 250 (limits included), the sum of m, n and p being between 0 and 250,

  b) of at least one polyol, for example of at least one poly(alkylene glycol), and
  c) of at least one polyisocyanate

the said polyurethane optionally being present in the form of an aqueous formulation with water and at least one surface-active agent, for thickening an aqueous composition, the said composition being selected from the group consisting of a paint, a putty, a render coating, a thick coating, a waterproof coating, a lacquer, a varnish, an ink, a mineral suspension (slurry), a paper coating colour, a cosmetic formulation and a detergent formulation.

**14.** Use of a polyurethane chosen from

- a polyurethane resulting from the condensation:

  a) of at least one bicycloheptyl or bicycloheptenyl compound, which is optionally polyalkoxylated, of formula

(I):

$$R - (CH_2)_a - [ (OE)_m - (OP)_n - (OB)_p ] - OH \qquad (I)$$

in which :

- R represents a bicycloheptyl or bicycloheptenyl radical, optionally substituted by one or more identical or different alkyl groups, comprising between 1 and 20 carbon atoms,
- a is equal to 1 or 2,
- $[ (OE)_m - (OP)_n - (OB)_p ]$ represents a polyalkoxyl chain consisting of alkoxyl units, distributed in blocks, alternating or random, chosen from ethoxyl OE units, propoxyl OP units and butoxyl OB units, and
- m, n and p represent, independently of one another, 0 or a number varying between 1 and 250 (limits included), the sum of m, n and p being between 0 and 250,

b) of at least one polyol, for example of at least one poly(alkylene glycol) and
c) of at least one polyisocyanate; and

• a polyurethane resulting from the condensation:

a) of at least one bicycloheptyl or bicycloheptenyl compound, which is optionally polyalkoxylated, of formula (I):

$$R - (CH_2)_a - [ (OE)_m - (OP)_n - (OB)_p ] - OH \qquad (I)$$

in which :

- R represents a bicycloheptyl or bicycloheptenyl radical, optionally substituted by one or more identical or different alkyl groups, comprising between 1 and 20 carbon atoms,
- a is equal to 0, 1 or 2,
- $[ (OE)_m - (OP)_n - (OB)_p ]$ represents a polyalkoxyl chain consisting of alkoxyl units, distributed in blocks, alternating or random, chosen from ethoxyl OE units, propoxyl OP units and butoxyl OB units, and
- m, n and p represent, independently of one another, 0 or a number varying between 1 and 250 (limits included), the sum of m, n and p being between 0 and 250,

b) of at least one polyol, for example of at least one poly(alkylene glycol) and
c) of at least one polyisocyanate

the said polyurethane optionally being present in the form of an aqueous formulation with water and at least one surface-active agent, to increase the high shear gradient of an aqueous paint composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 02102868 A, Coatex
- WO 2006048539 A, Coatex
- WO 2011100071 A
- US 2011243873 A


### Littérature non-brevet citée dans la description


- **W. WU ; G.D. SHAY.** Tailoring HASE Rheology Through Polymer Design: Effects of Hydrophobe Size, Acid Content, And Molecular Weight. *JCT Research,* Avril 2005, vol. 2 (6
- Polymers as Rheology Modifiers - Chap.12 : Systems approach to Rheology Control. ACS Symposium Series. 1991, vol. 462, 207-221